# EUROPÄISCHE PATENTSCHRIFT

(11) **EP 0 890 477 B1**
(45) Veröffentlichungstag und Bekanntmachung des Hinweises auf die Patenterteilung: **21.02.2007**
(21) Anmeldenummer: 98110909.3
(22) Anmeldetag: 15.06.1998
(51) Int. Cl.: B60Q 1/44

(54) **Bremsvorwarnsystem**
Braking prewarning device
Sytème de présignalisation pour freinage

(30) Priorität: 11.07.1997 DE 19729853
(43) Veröffentlichungstag der Anmeldung: 13.01.1999
(73) Patentinhaber: Volkswagen Aktiengesellschaft, 38436 Wolfsburg (DE)
(72) Erfinder: Fuhrmann, Karl-Horst, 38110 Braunschweig (DE); Peters, Dietmar, 38104 Braunschweig (DE); Kreft, Wolfgang, 38442 Wolfsburg (DE); Baumgarten, Diedrich, Dr., 38108 Braunschweig (DE)

(56) Entgegenhaltungen:
- EP-A- 0 480 830
- EP-A- 0 697 310
- DE-A- 4 213 148
- FR-A- 2 640 918

## Beschreibung

Die Erfindung betrifft ein Bremsvorwarnsystem, umfassend einen Sensor zur Erfassung einer schnellen Änderung der Gaspedalstellung und eine Auswertelogik, die Abhängigkeit von den erfaßten Werten des Sensors ein Schaltsignal für anzusteuernde Bremsleuchten erzeugt.

Bei Kraftfahrzeugen wird ein Bremsvorgang durch Einschaltung von Bremsleuchten dem rückwärtigen Verkehr signalisiert, so daß sich dieser entsprechend auf die veränderte Verkehrssituation einstellen kann. Um die Reaktionszeiten für den rückwärtigen Verkehr zu erhöhen, sind verschiedene Bremsvorwarnsysteme geschaffen worden, mittels derer die Bremsleuchten schneller oder bereits vor dem eigentlichen Betätigen der Bremse aktiviert werden.

Aus der EP 697 310 ist eine Vorrichtung zum Vorwärmen von Bremsleuchten bekannt, bei der die Glühwendeln der Bremsleuchten auf einer erhöhten Vortemperatur kurz unterhalb der Betriebstemperatur gehalten werden, so daß nur eine sehr geringe zusätzliche elektrische Leistung benötigt wird, um die Glühwendeln auf Betriebstemperatur zu bringen, so daß die Einschaltdauer der Bremsleuchten verringert wird. Zur Erhöhung der Betriebssicherheit ist die Vorrichtung zum Vorwärmen parallel zum eigentlichen Bremsleuchtenschaltkreis angeordnet, so daß bei Ausfall einer Komponente oder der ganzen Vorrichtung trotzdem die Bremsleuchten herkömmlich einschaltbar sind.

Aus der US 4,894,652 ist ein Bremsvorwarnsystem bekannt, bei dem ein elektromagnetischer oder pneumatischer Sensor in Form eines Blasebalgs auf dem Gaspedal angeordnet ist. Nimmt der Kraftfahrzeugführer den Fuß vom Gaspedal, so erzeugt der Sensor ein Signal, das proportional zur Fußgeschwindigkeit ist. Überschreitet das Signal einen Schwellwert, so werden die Bremsleuchten eingeschaltet und bleiben für eine Sekunde eingeschaltet, falls nicht zwischenzeitlich das Bremspedal betätigt wird. Die bekannte Vorrichtung weist eine Vielzahl von Nachteilen auf, so z.B. die unterschiedliche Höhe von Brems- und Gaspedal und die Anfälligkeit gegen Schmutz und Steine, die sich an der Schuhsohle des Kraftfahrzeugführers befinden.

Aus der EP 501 555 ist ein Bremsvorwarnsystem bekannt, bei dem ein Beschleunigungssensor auf dem Gaspedal angeordnet ist, jedoch oberhalb des Bereiches, wo der Kraftfahrzeugführer seinen Fuß aufstellt, so daß die Probleme aufgrund von Schmutz unterhalb der Schuhsohle vermieden werden. Der Beschleunigungssensor ist mit einer Auswertelogik verbunden, die die Signale des Beschleunigungssensors mit einem vorgegebenen Schwellwert vergleicht und bei Überschreitung die Bremsleuchten für eine Sekunde einschaltet.

Aus der WO 96/31364 ist ein Bremsvorwarnsystem bekannt, bei dem die Abnahme der Kraftstoffzuführung gemessen wird, die gemessene Abnahme in ein elektrisches Signal gewandelt und mit einem Schwellwert verglichen wird. Weiter sind dort Mittel zur Berücksichtigung des individuellen Fahrverhaltens des Kraftfahrzeugführers offenbart, um den vorgegebenen Schwellwert optimal an den einzelnen Kraftfahrzeugführer anzupassen. Nachteilig an allen bekannten Bremsvorwarnsystemen ist der zusätzliche Bedarf an Sensorik, sowie die zum Teil sehr aufwendigen Auswertelogiken. Dies führt neben den anfallenden Anschaffungskosten für die Sensorik auch zu einem erhöhten Verdrahtungsaufwand, der die Fehleranfälligkeit des Systems erhöht.

Aus der DE 40 28 290 ist ein Verfahren zur Verkürzung des Bremsweges in kritischen Fahrsituationen bekannt, bei dem eine Fremdkraft für einen erhöhten Bremsdruck sorgt, sobald die Bremspedalbetätigungsgeschwindigkeit einen Schwellwert übersteigt. Dabei geht man davon aus, daß bei Panik- oder Notbremsungen der Kraftfahrzeugführer das Bremspedal zwar mit hoher Geschwindigkeit betätigt, jedoch nur eine unzureichende Kraft auf das Bremspedal ausübt. Durch die Fremdkraft wird daher in dieser Situation der Kraftfahrzeugführer unterstützt und eine Bremskraft hervorgerufen, die höher ist als die Bremskraft, die bei normaler Bremspedalbetätigung der Pedalkraft entsprechen würde. Nachteilig an dem bekannten Verfahren ist, daß wie bei den Bremsvorwarnsystemen eine zusätzliche Sensorik benötigt wird.

Aus der EP 0 480 830 A1 ist ein Bremsvorwarnsystem bekannt, umfassend einen Sensor zur indirekten Erfassung einer schnellen Änderung der Gaspedalstellung und eine Auswertelogik, die in Abhängigkeit von den erfassten Werten des Sensors ein Schaltsignal für anzusteuernde Bremsleuchten erzeugt, wobei der Sensor als Wegsensor einer Kraftstoffzumesseinrichtung ausgebildet ist.

Aus der D.E 42 13 148 A1 ist eine Vorrichtung zur frühzeitigen Aktivierung der Bremsleuchten oder einer Zusatzbremsleuchte eines Kraftfahrzeuges bekannt, umfassend eine Einrichtung zur Erfassung der Rückstellgeschwindigkeit des Gaspedals oder der schließgeschwindigkeit der Kraftstoffzumesseinrichtung sowie zur Erzeugung eines Steuer- oder Schaltsignals zur Aktivierung der Bremsleuchten bzw. der Zusatzleuchte, sobald die erfasste Geschwindigkeit einen vorgebbaren Grenzwert überschreitet.

Aus der EP 0 706 466 B2 ist eine Vorrichtung zum Bremsen in einem Fahrzeug mit einem Bremssteuersystem bekannt, dem eine Erfassungseinrichtung mit einer einen dem Gaspedal des Fahrzeugs zugeordneten, ersten Sensor umfassenden, ersten Sensoreinrichtung zugeordnet, ist, wobei der erste Sensor bei einer reflexartigen Änderung der Position des rechten Fußes des Fahrers von einer ersten Stellung am Gaspedal in eine zweite Stellung ein erstes Signal an die Erfassungseinrichtung liefert und wobei ein automatisches Auslösen eines Bremsvorganges durch die Erfassungseinrichtung abhängig vom Auftreten des von dem ersten Sensor erzeugten ersten Signals ist, wobei die erste Sensoreinrichtung noch einen anderen dem Gaspedal zugeordneten Sensor umfasst, der ein zweites, an die Erfassungseinrichtung zu lieferndes Signal erzeugt, wenn sich der rechte Fuß des Fahrers vom Gaspedal löst, wobei die Erfassungseinrichtung das erste Signal des ersten Sensors so lange unterdrückt, bis der andere Sensor über ein zweites Signal anzeigt, dass der Fuß des Fahrers von der Oberfläche des Gaspedals gelöst wird.

Aus der WO 96/29688 ist ein Verfahren zur Ermittlung von dynamischen Verkehrsinformationen mittels Mobilfunk bekannt, wobei ein in einem Fahrzeug des Mobilfunkteilnehmers vorgesehenes Endgerät eine Fahrzeugselbstortung durchführt und weitere verkehrsrelevante

Attribute automatisch, per Femabfrage oder manuell erfasst werden, wobei die gewonnenen Daten über ein Mobilfunk-Telekommunikationsnetz direkt an weitere Mobilfunkteilriehmer und/oder an eine Dienstzentrale weitergeleitet werden, in welcher die Daten weiterverarbeitet und zusätzlich historische Verkehrsdaten erfasst und aufbereitet werden. Weiter werden fahrzeugseitige Attribute wie Funktion des Bremslichts,
des ABS, des Nebelscheinwerfers, des Scheibenwischers, des Brems-, Beschleunigungs- und Fahrtrichtungsverhaltens, des Befolgens von Verkehrsempfehlurigen und Wetterdaten erfasst.

Der Erfindung liegt daher das technische Problem zugrunde, ein Bremsvorwarnsystem zu schaffen, das ohne zusätzliche Sensorik auskommt und das Bremsverhalten verbessert.

Die Lösung des technischen Problems ergibt sich durch die Merkmale des Patentanspruches 1.
Durch die Ausbildung des Sensors zur Erfassung einer schnellen Änderung der Gaspedalstellung als Wegsensor eines mechanisch entkoppelten Gaspedals ist zur Realisierung des Bremsvorwarnsystems keine zusätzliche Sensorik erforderlich. Das Prinzip eines mechanisch entkoppelten Gaspedals beruht im wesentlichen darauf, die mechanische Bewegung des Gaspedals mittels eines Wegsensors in ein dem zurückgelegten Weg entsprechendes Signal zu verwandeln und einem nachgeschalteten Motorsteuergerät zuzuführen. Dieser beispielsweise als Potentiometer ausgebildeter Wegsensor erzeugt also daher genau die Signale, mittels derer eine schnelle Gaspedalbewegung erfassbar ist. Daher bedarf es keiner zusätzlichen Sensorik und auch die zusätzlich benötigte Verdrahtung reduziert sich, was das Bremsvorwarnsystem kostengünstiger und zuverlässiger realisieren lässt. Die Auswertelogik steht dabei in Wirkverbindung zum Bremspedal oder zur Bremse und spannt diese bei Erfassung eines Vorwarnsignals derart vor, dass ein geringer Druck bzw. Pedalweg im Falle der Bremsung benötigt wird. Weitere vorteilhafte Ausgestaltungen der Erfindung ergeben sich aus den Unteransprüchen.

Da der Wegsensor vorzeichengerecht den zurückgelegten Weg des Gaspedals ermittelt, muss dieses Signal im einfachsten Fall nur noch differenziert zu werden, um die Geschwindigkeit der Gaspedalbewegung zu ermitteln. Dazu kann beispielsweise die Auswertelogik als Differenzierglied z.B. als Koppel-RC-Glied ausgebildet sein.

In einer weiteren bevorzugten Ausführungsform steuert die Auswertelogik die Bremsleuchten nicht direkt an, sondern ein Schaltmittel, das zwischen Betriebsspannung und den Bremsleuchten angeordnet ist. Wird dann eine schnelle Bewegung des Gaspedals ermittelt, so steuert die Auswertelogik das Schaltmittel durch und die Bremsleuchten sind mit der Betriebsspannung verbunden. Der Vorteil ist, dass dadurch die Auswertelogik keine allzu großen Spannungshübe liefern muss und somit auch schneller die Signale aus Ausgang zur Verfügung stellen kann.

In einer zweiten bevorzugten Ausführungsform wird in Reihe zum Schaltmittel ein weiteres Schaltmittel angeordnet, das durch ein die Betätigung des Kupplungspedals anzeigendes Signal geschaltet wird. Wird das Kupplungspedal betätigt, so sperrt das Schaltmittel. Dadurch wird sichergestellt, dass bei Schaltvorgängen die Bremsleuchten nicht eingeschaltet werden, was den nachfolgenden Verkehr irritieren würde. Zu dem Schaltmittel für das Gaspedal und gegebenenfalls für das Kupplungspedal kann parallel ein Schaltmittel für das Bremspedal angeordnet werden, so daß auch bei Ausfall des Bremsvorwarnsystems die Bremsleuchten eingeschaltet sind. Des weiteren ist es durch geeignete Dimensionierung des Differenziergliedes möglich, das Schaltmittel für das Gaspedal nur für einen kurzen Moment zu öffnen, so daß die Bremsleuchten wieder erlöschen, falls nicht durch Betätigung des Bremspedals dessen zugeordnetes Schaltmittel durchschaltet.

In einer weiteren bevorzugten Ausführungsform ist dem Bremsvorwarnsystem eine Notrufeinrichtung zugeordnet, die durch das Bremsvorwarnsystem aktiviert wird. So kann bei Erfassung einer schnellen Bewegung des Gaspedals über einen GSM- Kanal eine Notrufnummer bis auf die letzte Zahl gewählt werden. Kommt es dann in dieser Verkehrssituation zu einem Unfall, so wird die letzte Zahl gewählt. Als Auslöser für die letzte Zahl kann dabei beispielsweise die Auslösung eines Airbags verwendet werden. Dadurch wird sichergestellt, daß auch bei einem schweren Unfall, wo beispielsweise die Sendeantenne abbricht, noch rechtzeitig ein Rettungsnotruf abgesetzt werden kann. Alternativ zu dem GSM-Kanal kann auch ein short-message-service-System Anwendung finden. Dabei wird bei Erfassung einer schnellen Gaspedalbewegung eine Nachricht an eine Zentrale übermittelt, die die Nachricht auswertet, wenn in einem vorgebbaren Zeitintervall kein Entwarnungssignal gesendet wird.

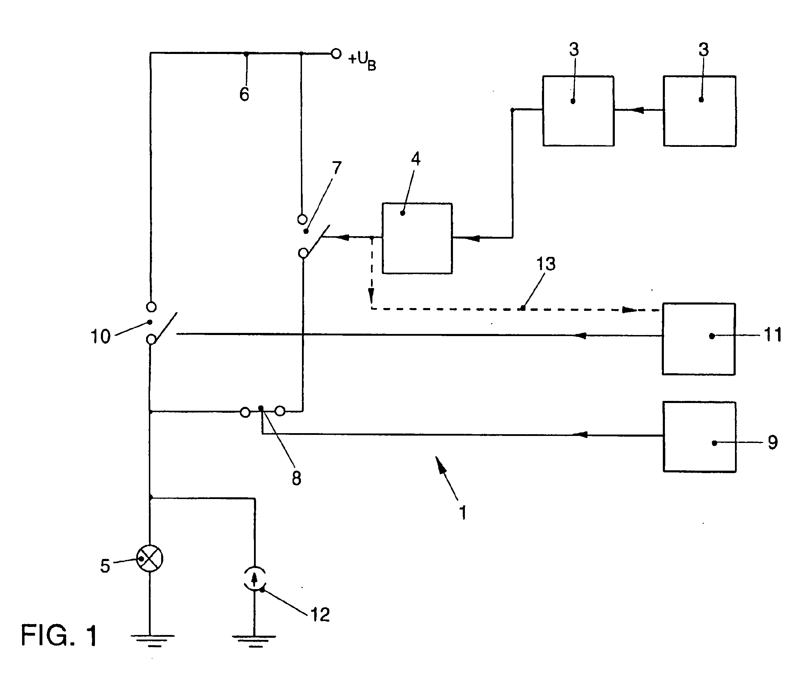

Die Erfindung wird nachfolgend anhand eines bevorzugten Ausführungsbeispieles näher erläutert. Die einzige Figur zeigt ein Blockschaltbild des Bremsvorwarnsystems.

Das Bremsvorwarnsystem 1 umfaßt einen Wegsensor 2 eines mechanisch entkoppelten Gaspedals 3, eine Auswertelogik 4 und anzusteuernde Bremsleuchten 5, wobei der Übersicht halber nur eine Bremsleuchte 5 dargestellt ist. Zwischen einer Betriebsspannung U_{B} führende Leitung 6 und den Bremsleuchten 5 ist ein Schaltmittel 7 angeordnet, das durch die Auswertelogik 4 gesteuert wird. In Reihe zu dem Schaltmittel 7 ist ein weiteres Schaltmittel 8 angeordnet, das durch ein vom Kupplungspedal 9 hervorgerufenes Signal angesteuert wird. Parallel zu den Schaltmitteln 7, 8 ist ein Schaltmittel 10 angeordnet, das durch ein vom Bremspedal 11 hervorgerufenes Signal angesteuert wird. Des weiteren ist den Bremsleuchten 5 eine Vorwärmeinrichtung 12 zugeordnet, die die Glühwendeln der Bremsleuchten 5 auf eine Temperatur kurz unterhalb der Betriebstemperatur vorwärmt.

Zusätzlich existiert eine Wirkverbindung 13 zwischen der Auswertelogik 4 und dem Bremspedal 11 bzw. der Bremse. Die Schaltmittel 7, 8, 10 können als Relais oder als elektronische Schalter, beispielsweise als Transistoren, ausgebildet sein. Des weiteren können die Schaltmittel 7, 8, 10 als einfache digitale Gatterschaltung ausgebildet sein.

Der Wegsensor 2 wandelt eine Bewegung des Gaspedals 3 in ein entsprechendes elektrisches Signal um. Dazu wird beispielsweise mittels eines am Gaspedal 3 befestigten Bowden-Zuges eine Spindel in Rotation versetzt, an deren anderem Ende ein Potentiometer angeordnet ist, dessen Widerstand sich entsprechend der Rotation der Spindel verändert. Hebt nun der Kraftfahrzeugführer ruckartig seinen Fuß vom Gaspedal 3, so erfaßt der Wegsensor 2 eine starke negative Änderung des Weges. Diese steile Signaländerung wird mittels der als Differenzierer ausgebildete Auswertelogik 4 erfaßt und als Vorbereitungshandlung für eine Bremsung aufgefaßt. Das Ausgangssignal der Auswertelogik 4 ist ein exponentiell abfallendes Signal. Diese Signal steuert das Schaltmittel 7 an, das durch die Ausgangsspannung der Auswertelogik so lange durchgeschaltet wird, bis die Ausgangspannung unter einem Schwellwert für das Schaltmittel 7 absinkt. Ist auch das Schaltmittel 8 durchgeschaltet, so sind die Bremsleuchten 5 mit der Betriebsspannung U_{B} verbunden und fangen an zu leuchten. Das Schaltmittel 8 ist immer durchgeschaltet, wenn das Kupplungspedal 9 nicht betätigt wird. War für die ruckartige Bewegung das Gaspedal 3 nicht eine beabsichtigte Bremsung die Ursache, sondern ein Schaltvorgang, so wird mit Betätigung des Kupplungspedals 9 das Schaltmittel 8 gesperrt und die Bremsleuchten 5 leuchten nicht auf bzw. erlöschen wieder. Waren hingegen weder eine Bremsung noch ein Schaltvorgang ursächlich, so werden die Bremsleuchten 5 mit absinken der Ausgangsspannung der Auswertelogik 4 unter den Schwellwert des Schaltmittels 7 wieder gelöscht. War hingegen eine Bremsung beabsichtigt, so wird durch die Betätigung des Bremspedals 11 das Schaltmittel 10 durchgeschaltet und die Bremsleuchten 5 bleiben eingeschaltet, bis der der Fahrer die Bremse wieder löst. Zur Verkürzung des Bremsweges kann die Auswertelogik 4 über die Wirkverbindung 13 die Bremse derart vorspannen, so daß ein geringer Druck bzw. Pedalweg im Falle der Bremsung benötigt wird.

## Patentansprüche

1. Bremsvorwarnsystem, umfassend ein Bremspedal, eine Bremse, einen Sensor zur Erfassung einer schnellen Änderung der Gaspedalstellung und eine Auswertelogik, die in Abhängigkeit von den erfassten Werten des Sensors ein Schaltsignal für anzusteuernde Bremsleuchten erzeugt, **dadurch gekennzeichnet, dass**
der Sensor als Wegsensor (2) eines mechanisch entkoppelten Gaspedals (3) ausgebildet ist und die Auswertelogik (4) in Wirkverbindung (13) zum Bremspedal (11) oder zur Bremse steht und diese bei Erfassung eines Vorwarnsignals vorspannt, derart, dass ein geringer Druck bzw. Pedalweg im Falle der Bremsung benötigt wird.

2. Bremsvorwarnsystem nach Anspruch 1, **dadurch gekennzeichnet, dass** die Auswertelogik (4) als Differenzierglied ausgebildet ist.

3. Bremsvorwarnsystem nach Anspruch 1 oder 2, **dadurch gekennzeichnet, dass** zwischen einer Betriebsspannung U_{B} führenden Leitung (6) und den anzusteuernden Bremsleuchten (5) ein Schaltmittel (7) angeordnet ist, das von der Auswertelogik (4) ansteuerbar ist.

4. Bremsvorwarnsystem nach Anspruch 3, **dadurch gekennzeichnet, dass** in Reihe zum Schaltmittel (7) ein erstes weiteres Schaltmittel (8) angeordnet ist, dass von einem die Betätigung des Kupplungspedal (9) anzeigenden Signal ansteuerbar ist.

5. Bremsvorwarnsystem nach Anspruch 3 oder 4, **dadurch gekennzeichnet, dass** parallel zu den Schaltmitteln (7, 8) ein zweites weiteres Schaltmittel (10) angeordnet ist, dass von einem die Betätigung des Bremspedals (11) anzeigenden Signal ansteuerbar ist.

6. Bremsvorwarnsystem nach einem der vorangegangenen Ansprüche, **dadurch gekennzeichnet, dass** den Bremsleuchten (5) eine Vorwärmeinrichtung (12) zugeordnet ist.

7. Bremsvorwarnsystem nach einem der vorangegangenen Ansprüche, **dadurch gekennzeichnet, dass** dem Bremsvorwarnsystem (1) eine Notrufeinrichtung zugeordnet ist, die mittels der Auswertelogik (4) aktivierbar ist.

8. Bremsvorwarnsystem nach Anspruch 7, **dadurch gekennzeichnet, dass** die Notrufeinrichtung als short-message-service oder als GSM-Kanal ausgebildet ist.

## Claims

1. Braking prewarning system, comprising a brake pedal, a brake, a sensor for sensing a rapid change in the position of the accelerator pedal and an evaluation logic system which generates a switching signal for brake lights to be actuated, as a function of the sensor values sensed, **characterized in that** the sensor is embodied as a displacement sensor (2) of a mechanically decoupled accelerator pedal (3) and the evaluation logic system (4) is operatively connected (13) to the brake pedal (11) or to the brake and prestresses the latter when a prewarning signal is sensed in such a way that a small pressure or pedal travel is required in the case of braking.

2. Braking prewarning system according to Claim 1, **characterized in that** the evaluation logic system (4) is embodied as a differentiating element.

3. Braking prewarning system according to Claim 1 or 2, **characterized in that** a switching means (7) which can be actuated by the evaluation logic system (4) is arranged between a line (6) which conducts operating voltage U_{B} and the brake lights (5) to be actuated.

4. Braking prewarning system according to Claim 3, **characterized in that** in series with the switching means (7) a first, further switching means (8) is arranged which can be actuated by a signal which indicates the activation of the clutch pedal (9).

5. Braking prewarning system according to Claim 3 or 4, **characterized in that** in parallel with the switching means (7, 8) a second, further switching means (10) is arranged which can be actuated by a signal which indicates the activation of the brake pedal (11).

6. Braking prewarning system according to one of the preceding claims, **characterized in that** a preheating device (12) is assigned to the brake lights (5).

7. Braking prewarning system according to one of the preceding claims, **characterized in that** an emergency call device, which can be actuated by means of the evaluation logic system (4), is assigned to the braking prewarning system (1).

8. Braking prewarning system according to Claim 7, **characterized in that** the emergency call device is embodied as a short message service or as a GSM channel.

## Revendications

1. Système de présignalisation de freinage comprenant une pédale de frein, un frein, un capteur pour détecter une modification rapide de la position de la pédale des gaz et une logique d'interprétation qui génère un signal de commutation pour des feux stop à commander en fonction des valeurs acquises du capteur, **caractérisé en ce que** le capteur est réalisé sous la forme d'un capteur de course (2) d'une pédale des gaz (3) découplée mécaniquement et la logique d'interprétation (4) est en liaison active (13) avec la pédale de frein (11) ou avec le frein et exerce une précontrainte sur ceux-ci en cas de détection d'un signal de préalerte de telle sorte qu'une pression ou qu'une course de pédale faible soit nécessaire en cas de freinage.

2. Système de présignalisation de freinage selon la revendication 1, **caractérisé en ce que** la logique d'interprétation (4) est réalisée sous la forme d'un comparateur.

3. Système de présignalisation de freinage selon la revendication 1 ou 2, **caractérisé en ce qu'**entre une ligne (6) conduisant la tension de service U_{B} et les feux stop (5) à commander est disposé un moyen de commutation (7) qui peut être commandé par la logique d'interprétation (4).

4. Système de présignalisation de freinage selon la revendication 3, **caractérisé en ce qu'**un autre premier moyen de commutation (8) qui peut être commandé par un signal indiquant l'actionnement de la pédale d'embrayage (9) est disposé en série avec le moyen de commutation (7).

5. Système de présignalisation de freinage selon la revendication 3 ou 4, **caractérisé en ce qu'**en parallèle avec les moyens de commutation (7, 8) est disposé un autre deuxième moyen de commutation (10) qui peut être commandé par un signal indiquant l'actionnement de la pédale de frein (11).

6. Système de présignalisation de freinage selon l'une des revendications précédentes, **caractérisé en ce qu'**un dispositif de préchauffage (12) est associé aux feux stop (5).

7. Système de présignalisation de freinage selon l'une des revendications précédentes, **caractérisé en ce qu'**un dispositif d'appel d'urgence qui peut être activé au moyen de la logique d'interprétation (4) est associé au système de présignalisation de freinage (1).

8. Système de présignalisation de freinage selon la revendication 7, **caractérisé en ce que** le dispositif d'appel d'urgence est réalisé sous la forme d'un service de messages courts ou d'un canal GSM.
